# EUROPÄISCHE PATENTANMELDUNG

(11) **EP 0 945 642 A2**
(43) Veröffentlichungstag der Anmeldung: **29.09.1999**
(21) Anmeldenummer: 99104999.0
(22) Anmeldetag: 12.03.1999
(51) Int. Cl.: F16F 15/00

(54) **Aktives Lagerelement für die Schwingungsisolierung, insbesondere für die Körperschallisolierung**

(30) Priorität: 24.03.1998 DE 19812748
(71) Anmelder: Deutsches Zentrum für Luft- und Raumfahrt e.V, 53127 Bonn (DE); Eras Entwicklung und Realisation adaptiver Systeme GmbH, 37085 Göttingen (DE)
(72) Erfinder: Campanile, Lucio Flavio, Dr.-Ing., 38102 Braunschweig (DE); Gnauert, Uwe, Dipl.-Phys., 37083 Göttingen (DE); Siebald, Hubertus Kurt, Dipl.-Phys., 37124 Lemshausen (DE); Neumann, Jörg, Dipl.-Ing., 34130 Kassel (DE); Wimmel, Roger, Dipl.-Phys., 37124 Rosdorf (DE)
(74) Vertreter: Patentanwälte Rehberg + Hüppe

(57) **Zusammenfassung**

Aktives Lagerelement (1) für die Schwingungsisolierung, insbesondere für die Körperschallisolierung einer schwingenden ersten Struktur (5) von einer zweiten Struktur (6), mit einem an der schwingenden ersten Struktur (5) angreifenden Verbindungsteil (2) und mit einem zwischen den beiden Strukturen (5, 6) mit dem Verbindungsteil (2) in Reihe geschalteten Aktuator (3), dessen Ausdehnung in einer Hauptrichtung (14) zwischen den beiden Strukturen (5, 6) durch ein Ansteuersignal (12) kontrolliert veränderbar ist. Das Verbindungsteil (2) ist so ausgebildet, daß es überwiegend Schwingungen in der Hauptrichtung (14) überträgt.

## Beschreibung

Die Erfindung bezieht sich auf ein aktives Lagerelement für die Schwingungsisolierung einer schwingenden ersten Struktur von einer zweiten Struktur, mit einem an der schwingenden ersten Struktur angreifenden Verbindungsteil und mit einem zwischen den beiden Strukturen mit dem Verbindungsteil in Reihe geschalteten Aktuator, dessen Ausdehnung in einer Hauptrichtung zwischen den beiden Strukturen durch ein Ansteuersignal kontrolliert veränderbar ist. Derartige Lagerelemente dienen dazu, eine Übertragung von Schwingungen von einer Struktur auf eine damit verbundene andere Struktur zu verhindern oder wirksam zu begrenzen. Beispielsweise kann es sich bei der schwingenden ersten Struktur um ein durch eine rotierende Spindel in Schwingung versetzte Gehäuse einer Werkzeugmaschine und bei der zweiten Struktur um ein Fundament einer Fabrikhalle handeln. Ebenso ist der andere Fall möglich, in dem es sich bei der schwingenden ersten Struktur um das Fundament der Fabrikhalle und bei der zweiten Struktur um die Werkzeugmaschine handelt.

Ein Lagerelement der eingangs beschriebenen Art ist aus der DE 195 27 514 A 1 bekannt. Das Lagerelement weist ein Bauteil auf der Seite der schwingenden ersten Struktur, ein Bauteil auf der Seite der zweiten Struktur und mindestens einen Aktuator auf. Der Aktuator besitzt eine Hauptrichtung und seine Ausdehnung in der Hauptrichtung zwischen zwei Angriffspunkten auf den Bauteilen ist durch ein Ansteuersignal kontrolliert veränderbar. Der Aktuator steht dabei zwischen den beiden Angriffspunkten unter Druckvorspannung, und ihm ist zwischen den beiden Angriffspunkten mindestens ein elastisches Element parallel geschaltet, das eine möglichst geringe Längssteifigkeit parallel zu der Hauptrichtung des Aktuators und eine möglichst hohe Quersteifigkeit quer zu der Hauptrichtung des Aktuators aufweist. Die hohe Quersteifigkeit des elastischen Elements dient zur Aufnahme von Querkräften und soll somit die Schub- und Scherbelastung des Aktuators verhindern. Die Schwingungen breiten sich dreidimensional von der schwingenden Struktur aus und werden über das Lagerelement an den Aktuator weitergegeben. Der Aktuator kann jedoch die Schwingungen in lediglich einer translatorischen Richtung, seiner Hauptrichtung, durch Änderung seiner Ausdehnung auslöschen. Folglich werden die Schwingungen in den anderen translatorischen Richtungen ungehindert an die zweite Struktur übertragen.

Ein aktives Strukturelement ist aus der DE 43 10 825 C 1 bekannt. Das Strukturelement weist als Verbindungsteil zwischen der schwingenden ersten und der zweiten Struktur einen Stab mit einer rohrförmigen Wandung aus Kohlefaserverbundwerkstoff mit unidirektionalen Fasern in der Hauptrichtung auf. Das Strukturelement besitzt einen Aktuator, dessen Ausdehnung in der Hauptrichtung durch ein Ansteuersignal kontrolliert veränderbar ist.

Das Strukturelement dient bei Aufbau einer Fachwerkstruktur hauptsächlich zur Übertragung von Zug- und Druckkräften. Bei Verwendung des Strukturelements im Sinne eines Lagerelements wird eine Übertragung von Querkräften jedoch aufgrund der Quersteifigkeit des Lagerelements nicht wirksam verhindert. Schwingungen quer zu der Hauptrichtung werden somit ungehindert an die zu isolierende Struktur übertragen.

Der Erfindung liegt die Aufgabe zugrunde, ein aktives Lagerelement mit einfachem Aufbau bei hoher Wirksamkeit bereitzustellen.

Erfindungsgemäß wird dies bei einem Lagerelement der eingangs beschriebenen Art dadurch erreicht, daß das Verbindungsteil so ausgebildet ist, daß es überwiegend Schwingungen in der Hauptrichtung überträgt.

Die Erfindung geht von dem Gedanken aus, eine schwingende erste Struktur mittels Lagerelementen mit einer zweiten Struktur so zu verbinden, daß pro Lagerelement Schwingungen, insbesondere Körperschall, in jeweils einer der Hauptrichtung entsprechenden translatorischen Richtung übertragen werden. Dies wird dadurch erreicht, daß jedes Lagerelement ein Verbindungsteil aufweist, das an der schwingenden Struktur angreift und so ausgebildet ist, daß es Schwingungen möglichst ausschließlich in dieser translatorischen Richtung überträgt. Das Lagerelement weist einen zwischen den beiden Strukturen mit dem Verbindungsteil in Reihe geschalteten Aktuator auf, dessen Ausdehnung in der Hauptrichtung zwischen den beiden Strukturen durch ein Ansteuersignal kontrolliert veränderbar ist. Das Ansteuersignal für die Ausdehnung des Aktuator wird so ausgebildet, daß durch den Aktuator im Frequenzbereich der Schwingungen ein ideal weiches Element realisiert wird. An diesem aktiv realisierten Impedanzsprung wird die Schwingungswelle totalreflektiert, ohne daß ein Energieübertrag auf die zu isolierende Struktur erfolgt. Die Polarisationsrichtung der übertragenen Schwingungen entspricht also der Hauptrichtung des Aktuators, wodurch die Schwingungen mittels des Aktuators reflektiert werden können und somit eine stark reduzierte Übergabe von Schwingungen in der Hauptrichtung zwischen den Strukturen stattfindet.

Das Verbindungsteil kann so ausgebildet sein, daß es Schwingungen senkrecht zu der Hauptrichtung reflektiert. Die von der schwingenden ersten Struktur ausgehenden dreidimensionalen Schwingungen werden durch das Verbindungsteil grundsätzlich eindimensional weitergeleitet. Es werden in den nicht durch den Aktuator beeinflußbaren Querrichtungen keine nennenswerten Schwingungen übertragen.

Das Verbindungsteil kann eine im Vergleich zu seiner Längssteifigkeit kleine Quersteifigkeit senkrecht zu der Hauptrichtung aufweisen. Hierdurch wird sichergestellt, daß keine nennenswerten Schwingungen in Querrichtung durch das Verbindungsteil übertragen werden.

Die Quersteifigkeit des Verbindungsteils kann im Vergleich zur Steifigkeit der angrenzenden schwingenden Struktur klein sein. Durch die unterschiedlichen Steifigkeiten ist an der Verbindungsstelle zwischen schwingender ersten Struktur und Verbindungsteil ein Impedanzsprung realisiert, der dafür sorgt, daß die sich von der schwingenden Struktur ausbreitende Schwingungswelle in Querrichtung reflektiert wird. Somit findet in Querrichtung nur ein geringer Energieübertrag auf das Verbindungsteil und folglich auch auf die zweite Struktur statt.

Das Verbindungsteil kann einen sich in der Hauptrichtung erstreckenden Draht aufweisen. Der Draht weist eine im Vergleich zu seiner relativ hohen Längssteifigkeit geringe Quersteifigkeit auf, wodurch er zur Übertragung von Kräften in Längsrichtung und nicht zur Übertragung von wesentlichen Kräften in Querrichtung ausgebildet ist.

Das Verbindungsteil kann einen Kohlefaserverbund mit sich in der Hauptrichtung unidirektional erstreckenden Kohlefasern aufweisen. Der Kohlefaserverbund weist durch die Anordnung der Fasern eine im Vergleich zu seiner relativ hohen Längssteifigkeit geringe Quersteifigkeit auf, wodurch er zur Übertragung von Kräften in Längsrichtung und nur stark eingeschränkt zur Übertragung von Kräften in Querrichtung ausgebildet ist. Dabei bildet der Kohlefaserverbund keinen druckfesten Stab und insbesondere kein Rohr aus, sondern ersetzt einen metallischen Draht unter weitgehender Nachbildung von dessen Eigenschaften.

Der Aktuator kann mindestens einen ein elastisches Element ringförmig umschließenden Piezokeramischen Ring aufweisen, wobei jeder Piezokeramische Ring durch das elastische Element mit einer Druckvorspannung beaufschlagt wird. Jeder Piezokeramische Ring kann dabei aus einem ringförmig angeordneten Stapel mehrerer Piezokeramischen Schichten bestehen oder auch von mehreren parallel zueinander und ringförmig um das elastische Element angeordneten Stapeln von Piezokeramischen Schichten ausgebildet werden. Das elastische Element dient zur Aufbringung der von dem Piezokeramischen Ring benötigten Druckvorspannung und gewährleistet den zerstörungsfreien Betrieb des Piezokeramischen Rings innerhalb des elastischen Bereichs des elastischen Elements.

Das elastische Element kann durch einen Lötvorgang fest mit zwei radial abstehenden Buchsen verbunden sein, an denen sich der Piezokeramische Ring in der Hauptrichtung beidseitig abstützt. Über diese Buchsen kann die für den Piezokeramischen Ring notwendige Druckvorspannung aufgebracht werden. Sie ist erforderlich, da der Piezokeramische Ring keiner Zugbelastung ausgesetzt werden darf. Die für den Lötvorgang benötigte Temperatur liegt oberhalb der Curie-Temperatur, bei der die Piezokristalle ihre Polarisation verlieren. Daher müssen die Piezokristalle nach dem Lötvorgang polarisiert werden.

Es können ein Sensor zur Erfassung der Schwingung der schwingenden ersten Struktur, ein Sensor zur Erfassung der Schwingung der zweiten Struktur und ein Regler zur Aufnahme der Signale der Sensoren und zur Weitergabe des Ansteuersignals an den Aktuator vorgesehen sein. Dabei wird vorzugsweise ein adaptiver Regelalgorithmus angewandt. Als Eingangssignal wird dem Regler das Sensorsignal der schwingenden ersten Struktur und als Fehlersignal das Sensorsignal der zweiten Struktur zugeführt. Mit Hilfe dieser beiden Signale wird das durch den Regler an den Aktuator abzugebende Ansteuersignal bestimmt. Der Aktuator kann direkt oder indirekt an der zweiten Struktur angeordnet sein, wobei bei letzterer Anordnung ein weiteres Verbindungsteil zwischen dem Aktuator und der zweiten Struktur vorgesehen ist. Gleiches gilt für den Sensor zur Erfassung der Schwingung der zweiten Struktur.

Es können mehrere Lagerelemente so angeordnet sein, daß sie die schwingende erste Struktur gegenüber der zweiten Struktur lagestabil verspannen. Es sollte für jeden relevanten Freiheitsgrad der Bewegung mindestens ein Lagerelement vorgesehen sein.

Die Erfindung wird anhand bevorzugter Ausführungsbeispiele genauer erläutert und beschrieben. Dabei zeigt:
- Fig. 1: eine schematische Ansicht einer ersten Ausführungsform einer Lagerung einer schwingenden ersten Struktur gegenüber einer zweiten Struktur mit einem aktiven Lagerelement,
- Fig. 2: eine schematische Ansicht der Schwingungsausbreitung von der schwingenden ersten Struktur über das aktive Lagerelement auf die zweite Struktur bei der Lagerung gemäß Fig. 1,
- Fig. 3: eine schematische Ansicht der Schwingungsausbreitung von der schwingenden ersten Struktur über ein passives Lagerelement ohne Aktuator auf die zweite Struktur,
- Fig. 4: eine schematische Ansicht einer zweiten Ausführungsform einer Lagerung mit einem aktiven Lagerelement,
- Fig. 5: eine Schnittansicht eines Teils des aktiven Lagerelements gemäß Fig. 4 in einer bevorzugten Ausführungsform,
- Fig. 6: eine schematische Ansicht einer dritten Ausführungsform einer Lagerung mit einem aktiven Lagerelement,
- Fig. 7: eine schematische Ansicht einer weiteren Ausführungsform einer Lagerung mit mehreren Verbindungsteilen und einem großflächigen Aktuator,
- Fig. 8: eine schematische Ansicht einer weiteren Ausführungsform einer Lagerung mit mehreren Verbindungsteilen und gleichvielen Aktuatoren und
- Fig. 9: eine Schnittansicht einer konkreten Ausführungsform der Lagerung gemäß Fig. 8
- Fig. 10: eine Detailansicht der konkreten Ausführungsform gemäß Fig. 9
- Fig. 11: ein Beispiel für eine lagestabile Lagerung mit mehreren Lagerelementen.

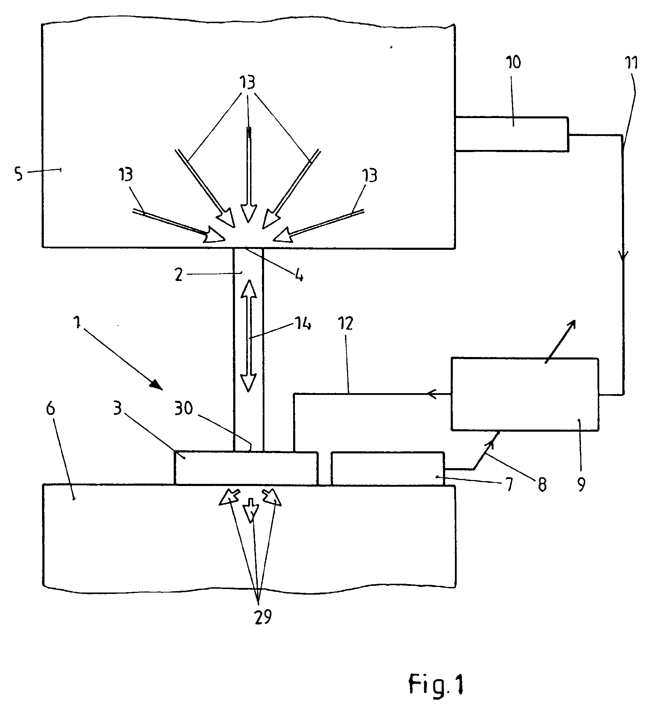

In Fig. 1 ist ein aktives Lagerelement 1 dargestellt. Das Lagerelement 1 weist ein Verbindungsteil 2 und einen mit dem Verbindungsteil 2 in Reihe geschalteten Aktuator 3 auf. Das Verbindungsteil 2 ist an seinem dem Aktuator 3 abgewandten Ende 4 mit einer schwingenden ersten Struktur 5 verbunden. An seinem anderen Ende 30 ist das Verbindungsteil 2 mit dem Aktuator 3 verbunden. Das Verbindungsteil 2 weist in einer Hauptrichtung 14, die der Verbindungsrichtung des Lagerelements 1 und seiner eigenen Haupterstreckungsrichtung entspricht, eine relativ große Längssteifigkeit und senkrecht dazu eine relativ kleine Quersteifigkeit auf. Hierdurch wird für Schwingungen der schwingenden ersten Struktur 5, die nicht in der Haupterstreckungsrichtung verlaufen ein Impedanzsprung realisiert. Der Aktuator 3 ist mit einer zweiten Struktur 6 verbunden. Die Ausdehnung des Aktuators 3 wird durch ein Ansteuersignal 12 bestimmt, das von einem Regler 9 an den Aktuator 3 abgegeben wird. Auf der zweiten Struktur 6 ist ein Schwingungssensor 7 angeordnet, dessen Signal 8 in den Regler 9 eingeht. An der schwingenden ersten Struktur 5 ist ein Schwingungsensor 10 angeordnet, dessen Signal 11 in den Regler 9 eingeht. Der Regler 9 bestimmt aus diesen beiden Signalen 8, 11 das Ansteuersignal 12, das in den Aktuator 3 eingeht. Die schwingende erste Struktur 5 schwingt gemäß Pfeilen 13, wobei sich die Schwingungen gemäß der Hauptrichtung 14 in dem Verbindungsteil 2 und ohne Aktivierung des Aktuators 3 gemäß Pfeilen 29 bis auf die zweite Struktur 6 ausbreiten.

Die Schwingungen der schwingenden ersten Struktur 5 breiten sich dreidimensional aus, was durch die Pfeile 13 symbolisiert ist. Die Schwingungen in der Hauptrichtung 14 treten über das Ende 4 des Verbindungsteils 2 in das Verbindungsteil 2 ein und setzen sich dort in der Hauptrichtung 14 eindimensional fort. Die Schwingungen in den anderen Richtungen werden aufgrund des Impedanzsprungs zwischen der schwingenden ersten Struktur 5 und des Verbindungsteils 2 in die schwingende erste Struktur 5 zurückreflektiert. Bei Nichtaktivierung des Aktuators 3 werden die Schwingungen in der Hauptrichtung 14 über den Aktuator 3 auf die zweite Struktur 6 übertragen und breiten sich dort wiederum ungehindert dreidimensional aus. Wenn nun der Regelkreis des aktiven Lagerelements 1 aktiviert wird, nimmt der Schwingungssensor 10 ein Signal 11 an der schwingenden ersten Struktur 5 und der Schwingungssensor 7 ein Signal 8 an der zweiten Struktur 6 auf. Diese Signale 11, 8 sind Eingangssignale des Reglers 9, der daraus das Ansteuersignal 12 als Ausgangssignal bildet. Das Ansteuersignal 12 ist das Eingangssignal des Aktuators 3 und dient zu dessen Ansteuerung. Das Signal 8 des Schwingungssensors 7 an der zweiten Struktur 6 ist das Fehlersignal, das durch den angewandten Regelalgorithmus zu minimieren, d.h. gegen Null zu bringen ist. Das Ansteuersignal 12 hat zur Folge, daß der Aktuator 3 eine Längenänderung in der Hauptrichtung 14 vornimmt und somit im Frequenzbereich der Schwingungen ein ideal weiches Element realisiert. Dieser aktiv realisierte Impedanzsprung bewirkt eine näherungsweise Aufhebung der Schwingungen im Bereich des Aktuators 3. Somit kommt es zu keiner wesentlichen Übertragung von Schwingungen von der schwingenden ersten Struktur 5 auf die zweite Struktur 6. Das Lagerelement 1 ist insbesondere zur Isolierung von Körperschall, d.h. von Schwingungen in einem Bereich oberhalb von 80 Hz, insbesondere oberhalb von 100 Hz und vorzugsweise oberhalb von 200 Hz geeignet, in dem passive Isolierungsmaßnahmen nur einen geringen Wirkungsgrad aufweisen.

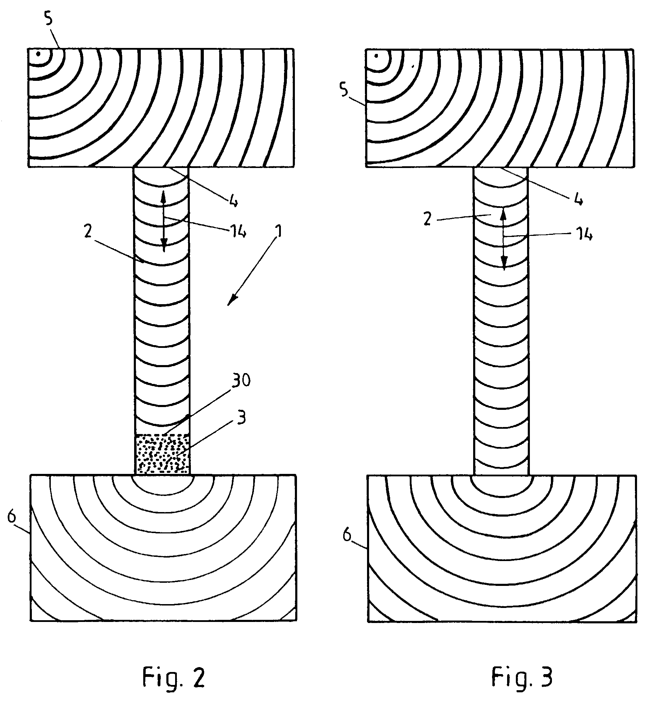

In Fig. 2 ist die Ausbreitung der Schwingungen von der schwingenden ersten Struktur 5 über das Ende 4 des Verbindungsteils 2, das Verbindungsteil 2, dessen anderes Ende 30 und den Aktuator 3 auf die zweite Struktur 6 dargestellt. Dabei trifft ein sich in der schwingenden ersten Struktur 5 ungehindert ausbreitendes dreidimensionales Schwingungsfeld von der schwingenden ersten Struktur 6 auf das Verbindungsteils 2, in dem es sich aufgrund dessen geringer Quersteifigkeit nur annähernd eindimensional in der Hauptrichtung 14 fortsetzen kann. Dieses im wesentlichen eindimensionale Schwingungsfeld trifft am Ende 30 des Verbindungsteils 2 auf den Aktuator 3, der mittels seiner an die Schwingung angepaßten Ausdehnung eine Totalreflexion der Schwingungen bewirkt. Es ist also ein aktiver Impedanzsprung realisiert. Die Schwingungen setzen sich, wie durch die geringere Strichstärke symbolisiert, stark abgeschwächt in der zweiten Struktur 6 dreidimensional fort.

In Fig. 3 ist im Gegensatz zu Fig. 2 ein passives Lagerelement dargestellt. Es wird deutlich, daß sich die Schwingungen in dem Verbindungsteil 2 zwar vorzugsweise eindimensional fortsetzen, daß es jedoch zu keiner großen Reduzierung der Stärke der Schwingungen kommt.

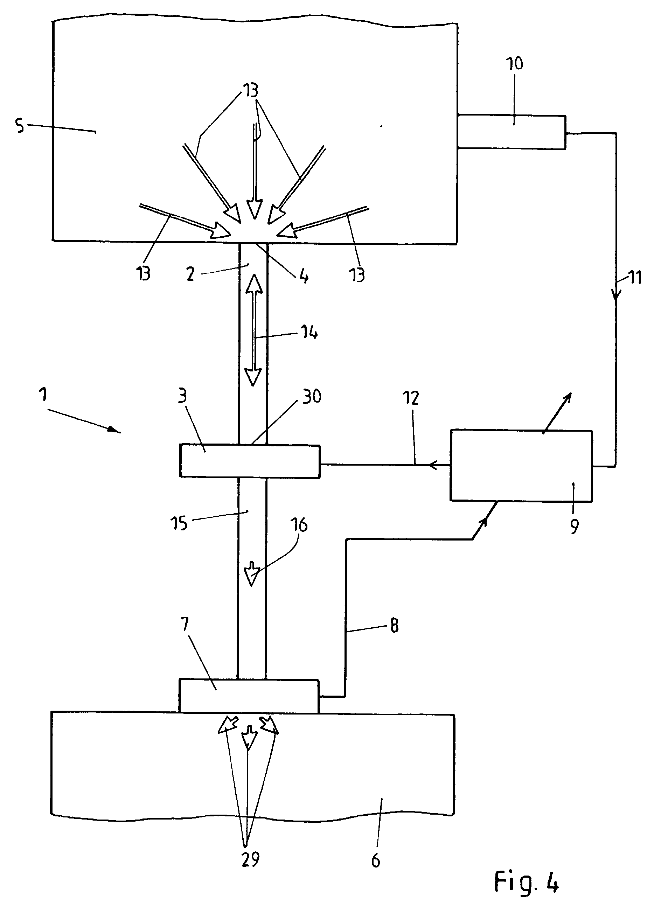

In Fig. 4 ist eine Ausführungsform des Lagerelements 1 dargestellt, in der ein weiteres Verbindungsteil 15 zwischen dem Aktuator 3 und dem auf der zweiten Struktur 6 vorgesehenen Schwingungssensor 7 angeordnet ist. Dabei setzen sich die schwachen, verbliebenen Schwingungen in dem Verbindungsteil 15 gemäß Pfeil 16 fort und treffen unmittelbar und ungedämpft auf den Schwingungssensor 7. Diese Anordnung hat den weiteren Vorteil, daß der Aktuator 3 in einem größeren Abstand von der zweiten Struktur 6 angeordnet werden kann. Dies ist vorteilhaft, da auf beiden Seiten des Aktuators 3 ein im wesentlichen eindimensionales Schwingungsfeld vorliegt.

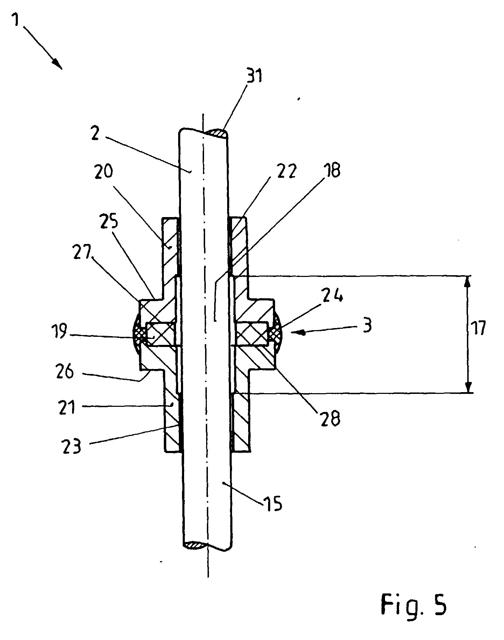

In Fig. 5 sind der Aktuator 3 und zwei Verbindungsteile 2, 15 des Lagerelements 1 aus Fig. 4 in einer bevorzugten Ausführungsform dargestellt. Das Lagerelement 1 weist einen Draht 31 auf, der zu seinem einen Ende hin das Verbindungsteil 2, zu seinem anderen Ende hin das Verbindungsteil 15 und zwischen diesen Enden in einem Bereich 17 ein elastisches Element 18, das funktional dem Aktuator 3 zuzuordnen ist, ausbildet. Das Verbindungsteil 2 ist dabei mit der nicht dargestellten schwingenden ersten Struktur und das Verbindungsteil 15 mit der nicht dargestellten zweiten Struktur verbunden. Die Verbindungsteile 2, 15 sind mit dem Aktuator 3 in Reihe geschaltet. Der Aktuator besteht aus dem elastischen Element 18, einem Piezokeramischen Ring 19, Buchsen 20, 21 und einer Schutzhülle 24. Bei der Montage des Aktuators 3 wird zunächst die untere Buchse 21 über den Draht 31 geschoben, bis sie mit ihrem oberen axialen Ende an das elastische Element 18 anschließt. Die Buchse 21 und der Draht 31 werden nun in einem Lötverfahren durch Hartlot 23 fest miteinander verbunden. Die Buchse 21 weist an ihrem oberen Ende eine Auflagefläche 28 auf, die als axialer Anschlag für den Piezokeramischen Ring 19 dient, der nun von oben über das Verbindungsteil 2 geschoben wird. Als nächstes wird die obere Buchse 20 von oben über das Verbindungselement 2 geschoben, bis der Piezokeramische Ring 19 an der Auflagefläche 27 der Buchse 20 anliegt und somit zwischen den beiden Auflageflächen 27, 28 der Buchsen 20, 21 zentriert wird. Über ein an den Spannflächen 25, 26 der Buchsen 20, 21 angreifendes Werkzeug (nicht dargestellt) kann nun die für den Betrieb des Piezokeramischen Rings 19 notwendige Druckvorspannung aufgebracht werden. Im verspannten Zustand wird nun die obere Buchse 20 mit dem Draht 31 durch Hartlot 22 fest verbunden. Das elastische Element 18 im Bereich 17 zwischen den Hartloten 22, 23 nimmt die Druckvorspannung und Längenänderungen des Piezokeramischen Rings 19 in der Hauptrichtung 14 elastisch auf. In einem letzten Schritt wird nun der Piezokeramische Ring 19 an seinem äußeren Umfang mit der Schutzhülle 24 ummantelt, um ihn vor Spannungsüberschlägen und Feuchtigkeit zu schützen. Der Piezokeramische Ring 19 kann aus einem ringförmig angeordneten Stapel mehrerer Piezokeramischen Schichten bestehen oder auch von mehreren parallel zueinander und ringförmig angeordneten Stapeln von Piezokeramischen Schichten ausgebildet werden. Wenn als Verbindungsverfahren des Drahts 31 mit den Buchsen 20, 21 ein Lötverfahren oder ein anderes eine Erwärmung des Piezokeramischen Rings 19 mit sich bringendes Verfahren verwandt wird, muß der Piezokeramische Ring 19 neu polarisiert werden, da die Piezokeramischen Schichten beim Überschreiten der Curie-Temperatur ihre Polarisation verlieren.

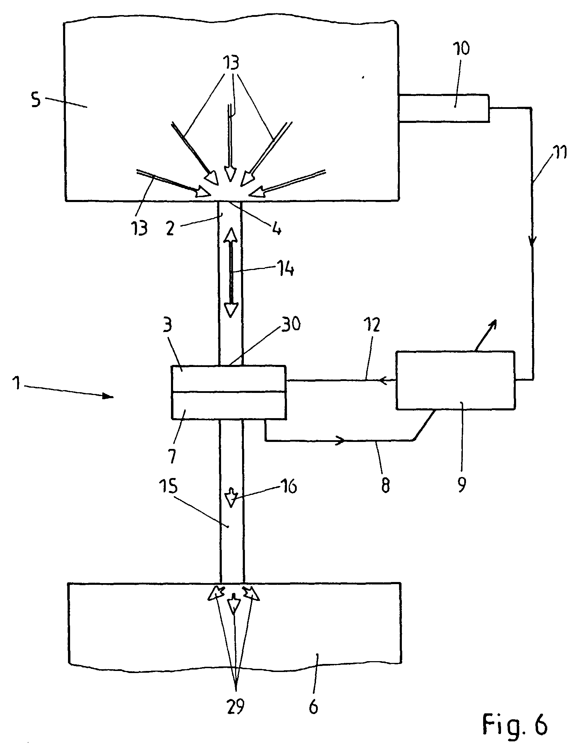

Bei der in Fig. 6 dargestellten Ausführungsform des Lagerelements 1 ist im Gegensatz zu den Figuren 1 und 4 der Schwingungssensor 7 nicht direkt auf der zeiten Struktur 6 angeordnet, sondern durch das Verbindungsteil 15 mit dieser verbunden. Diese Anordnung hat den Vorteil, daß auch der Schwingungssensor 7 in einem größeren Abstand von der zweiten Struktur 6 angeordnet werden kann. Dies kann beispielsweise erforderlich sein, um einer Erwärmung des Schwingungssensors 7 durch die zweite Struktur 6 zu vermeiden oder wenn der Sensor aufgrund der Geometrie der zweiten 6 nicht direkt auf dieser angeordnet werden kann.

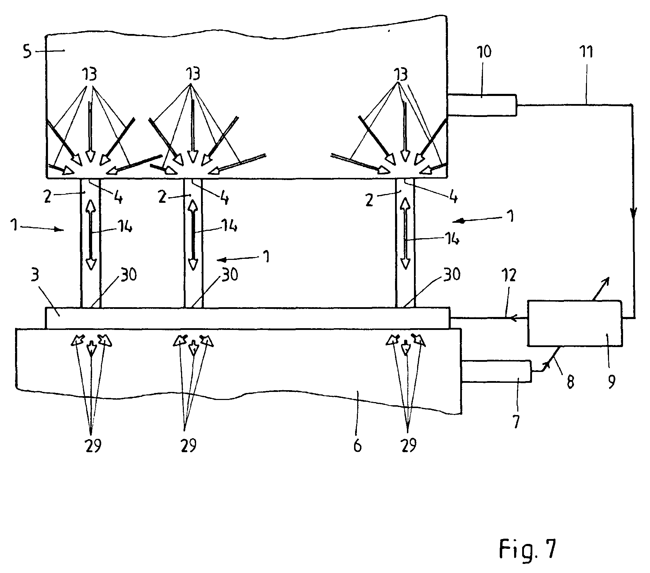

In Fig. 7 ist eine Ausführungsform einer Lagerung dargestellt, bei der eine Vielzahl von Verbindungsteilen 2 zwischen der schwingenden ersten Struktur 5 und dem auf der zweiten Struktur 6 vorgesehenen großflächigen Aktuator 3 angeordnet ist. Die Anordnung nur eines Aktuators 3 hat den Vorteil, daß der Aufbau des Regelkreises sehr einfach ist.

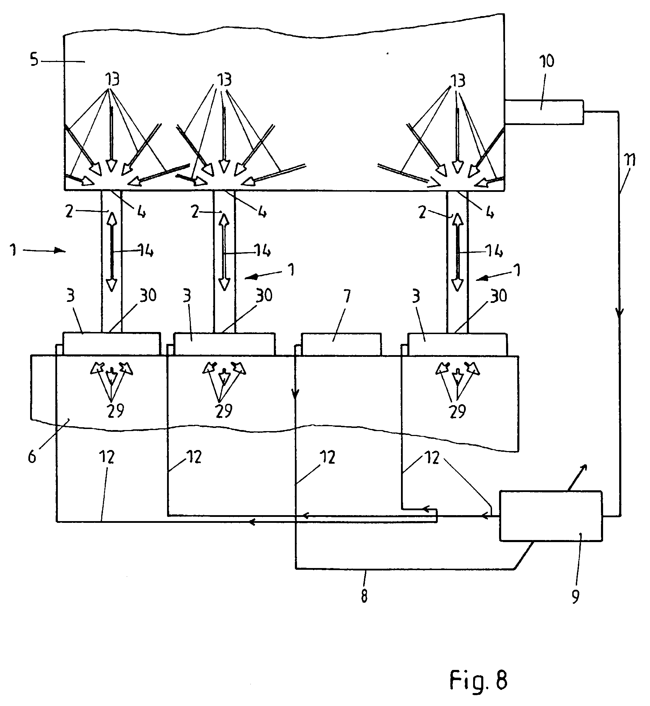

In Fig. 8 ist eine ähnliche Ausführungsform einer Lagerung wie in Fig. 7 dargestellt, wobei im Unterschied zu Fig. 7 nicht ein großflächiger Aktuator 3, sondern pro Verbindungsteil 2 je ein Aktuator 3 vorgesehen ist. Es sind hier wie in Fig. 7 drei Verbindungsteile 2 dargestellt, die Anzahl ist jedoch - wie durch die gepunktete Linie zwischen den Verbindungsteilen 2 angedeutet - beliebig wählbar. Diese Anordnung hat den Vorteil, daß durch die Aktuatoren 3 auf unterschiedlichen Flächen der zweiten Struktur 6 angeordnet werden können. Damit ist eine Anwendung auch bei Strukturen komplizierter Geometrie möglich.

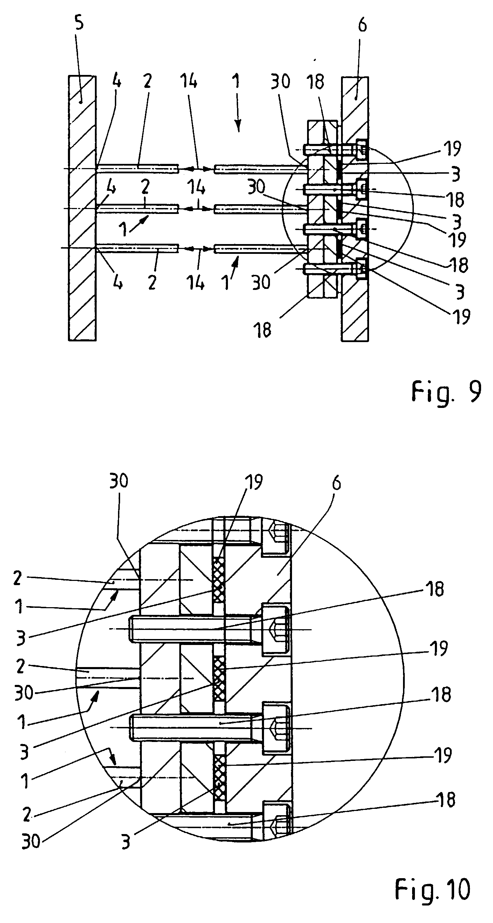

In den Figuren 9 und 10 ist eine konkrete Ausführungsform der Lagerung mit je einem Aktuator 3 pro Verbindungsteil 2 dargestellt. Hierbei wird die Funktion des elastischen Elements 18 durch Schrauben übernommen, die die notwendige Druckvorspannung der Piezokeramischen Ringe 19 gewährleisten.

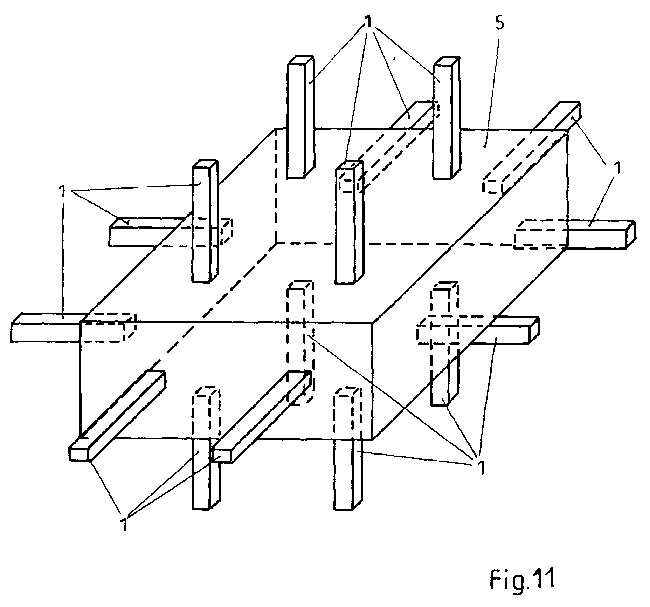

In Fig. 11 ist ein Beispiel einer lagestabilen Lagerung der schwingenden ersten Struktur 5 gegenüber der (nicht dargestellten) zweiten Struktur dargestellt.

### BEZUGSZEICHENLISTE

- 1: - Lagerelement
- 2: - Verbindungsteil
- 3: - Aktuator
- 4: - Ende
- 5: - erste Struktur
- 6: - zweite Struktur
- 7: - Schwingungssensor
- 8: - Signal
- 9: - Regler
- 10: - Schwingungssensor
- 11: - Signal
- 12: - Ansteuersignal
- 13: - Pfeil
- 14: - Hauptrichtung
- 15: - Verbindungsteil
- 16: - Pfeil
- 17: - Bereich
- 18: - elastisches Element
- 19: - Piezokeramischer Ring
- 20: - Buchse
- 21: - Buchse
- 22: - Hartlot
- 23: - Hartlot
- 24: - Schutzhülle
- 25: - Spannfläche
- 26: - Spannfläche
- 27: - Auflagefläche
- 28: - Auflagefläche
- 29: - Pfeil
- 30: - Ende
- 31: - Draht

## Patentansprüche

1. Aktives Lagerelement für die Schwingungsisolierung, insbesondere für die Körperschallisolierung einer schwingenden ersten Struktur von einer zweiten Struktur, mit einem an der schwingenden ersten Struktur angreifenden Verbindungsteil und mit einem zwischen den beiden Strukturen mit dem Verbindungsteil in Reihe geschalteten Aktuator, dessen Ausdehnung in einer Hauptrichtung zwischen den beiden Strukturen durch ein Ansteuersignal kontrolliert veränderbar ist, **dadurch gekennzeichnet**, daß das Verbindungsteil (2) so ausgebildet ist, daß es überwiegend Schwingungen in der Hauptrichtung (14) überträgt.

2. Lagerelement nach Anspruch 1, **dadurch gekennzeichnet**, daß das Verbindungsteil (2) so ausgebildet ist, daß es Schwingungen senkrecht zu der Hauptrichtung (14) reflektiert.

3. Lagerelement nach Anspruch 2, **dadurch gekennzeichnet**, daß das Verbindungsteil (2) eine im Vergleich zu seiner Längssteifigkeit kleine Quersteifigkeit senkrecht zu der Hauptrichtung (14) aufweist.

4. Lagerelement nach Anspruch 3, **dadurch gekennzeichnet**, daß die Quersteifigkeit des Verbindungsteils (2) im Vergleich zur Steifigkeit der angrenzenden schwingenden ersten Struktur (5) klein ist.

5. Lagerelement nach einem der Ansprüche 1 bis 4, **dadurch gekennzeichnet**, daß das Verbindungsteil (2) einen sich in der Hauptrichtung (14) erstreckenden Draht (31) aufweist.

6. Lagerelement nach einem der Ansprüche 1 bis 4, **dadurch gekennzeichnet**, daß das Verbindungsteil (2) einen Kohlefaserverbund mit sich in der Hauptrichtung (14) unidirektional erstreckenden Kohlefasern aufweist.

7. Lagerelement nach einem der Ansprüche 1 bis 6, **dadurch gekennzeichnet**, daß der Aktuator (3) mindestens einen ein elastisches Element (18) ringförmig umschließenden Piezokeramischen Ring (19) aufweist, wobei jeder Piezokeramische Ring (19) durch das elastische Element (18) mit einer Druckvorspannung beaufschlagt wird.

8. Lagerelement nach Anspruch 7, **dadurch gekennzeichnet**, daß das elastische Element (18) durch einen Lötvorgang fest mit zwei radial abstehenden Buchsen (20, 21) verbunden ist, an denen sich der Piezokeramische Ring (19) in der Hauptrichtung (14) beidseitig abstützt.

9. Lagerelement nach einem der Ansprüche 1 bis 8, **dadurch gekennzeichnet**, daß ein Sensor (10) zur Erfassung der Schwingung der schwingenden ersten Struktur (5), ein Sensor (7) zur Erfassung der Schwingung der zweiten Struktur (6) und ein Regler (9) zur Aufnahme der Signale der Sensoren (10, 7) und zur Weitergabe des Ansteuersignals (12) an den Aktuator (3) vorgesehen sind.

10. Lagerung für die Schwingungsisolierung einer schwingenden ersten Struktur von einer zweiten Struktur mit mehreren Lagerelementen nach einem der Ansprüche 1 bis 9, **dadurch gekennzeichnet**, daß die Lagerelemente (1) so angeordnet sind, daß sie die schwingende erste Struktur (5) gegenüber der zweiten Struktur (6) lagestabil verspannen.
